# EUROPEAN PATENT APPLICATION

(11) **EP 1 318 463 A1**
(43) Date of publication of application: **11.06.2003**
(21) Application number: 01410156.2
(22) Date of filing: 05.12.2001
(51) Int. Cl.: G06F 17/30

(54) **Electronic virtual components description import in intranet catalogs**

(71) Applicant: Design and Reuse, 38025 Grenoble cedex 1 (FR)
(72) Inventor: Saucier, Gabriele, 38320 Bresson (FR); Coeurdevey, Philippe, 38000 Grenoble (FR)
(74) Representative: Hecké, Gérard

(57) **Abstract**

The system comprises at least one corporate electronic virtual component intranet target catalog (2), and an external import portal (3) with a buffer catalog (4). The target and buffer catalogs are compatible well structured XML catalogs, having the same infrastructure and containing electronic virtual components information described therein by XML meta data in predefined corporate formats. The buffer catalog (4) of the external import portal (3) is accessible to electronic virtual components suppliers (5) for upload, update or modification of the electronic virtual components XML meta data. The corresponding XML meta data in the predefined format are transferred automatically from the buffer catalog (4) to the target catalog, thus populating an image catalog for use only within the firewall protected intranet environment.

## Description

### Background of the invention

The invention relates to a system for importing external electronic virtual components information in intranet catalogs.

### State of the art

Design companies, more specifically system on a chip (SOC) design companies, use in their designs more than 95 % of electronic virtual components, generally called IPs, i.e. "intellectual property" and constituting reusable blocks, in order to face cost and resource limitation as well as to meet time to market requirements.

For these reasons major electronic design companies show interest in externally provided electronic virtual components (IPs) and purchase such electronic virtual components from third party suppliers. In order to efficiently select external electronic virtual components as well as to make available electronic virtual components reused as many times as possible, the designers in a large corporation need to get accurate information through an easily accessible intranet catalog and easy download mechanisms.

This has to be done within a firewall protected intranet environment, as very confidential design project data are implied by the use of electronic virtual components. Designers in a large corporation work within this firewall through intranet and no data or information are exchanged via Internet. In such a context there may be an issue for the designers to get access to information about external electronic virtual components for making appropriate decisions.

### Object of the invention

The object of the invention is to provide an architecture and mechanisms to allow the import of IP description or meta data from external suppliers into an intranet IP catalog without intrusion within the intranet protection firewall.

This object is achieved by a system according to the appended claims.

More particularly, a system according to the invention comprises:
at least one intranet target IP catalog stored on an electronic virtual components information intranet IP management portal, having a predefined infrastructure and containing electronic virtual components descriptions through XML meta data,
an external import portal hosting a buffer catalog having an infrastructure compatible with the target intranet catalog infrastructure and containing electronic virtual components descriptions through by XML meta data that can be uploaded on line by electronic virtual components suppliers ,
and means for transferring the electronic virtual components XML meta data from the buffer catalog to the target catalog .

### Brief description of the drawings

Other advantages and features will become more clearly apparent from the following description of particular embodiments of the invention, given as non-restrictive examples only and represented in the accompanying drawings, in which:
Figure 1 illustrates the overall architecture of a system according to the invention.
Figure 2 illustrates the data upload. in an IP catalog
Figure 3 illustrates data view in an IP catalog.
Figure 4 illustrates the administrative commands in the import portal.
Figure 5 illustrates the upload commands in the import portal.

### Description of particular embodiments

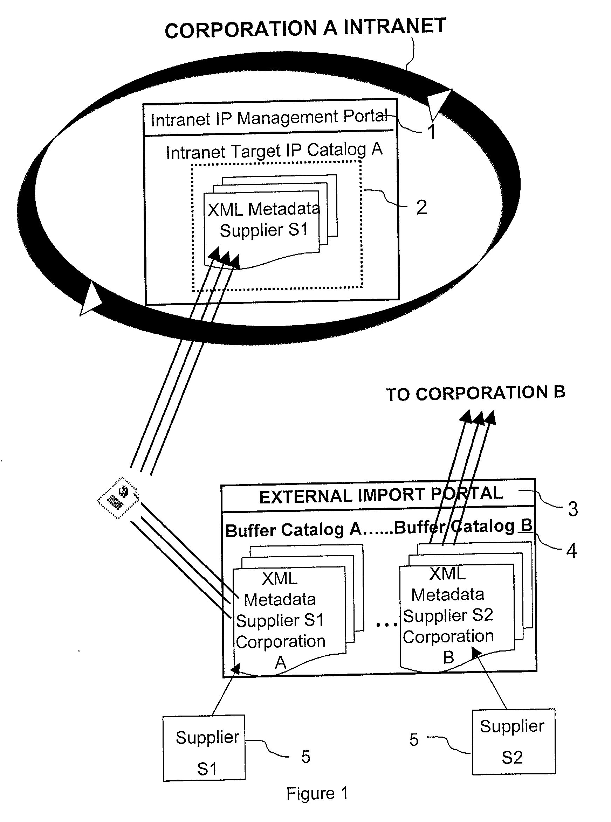

A large corporation, called target corporation, interested in acquiring IPs from external suppliers has created within its firewall an IP intranet management portal 1 (Figure 1) hosting an intranet IP catalog, or target catalog 2, where the corporate designers can get information about internal and external reusable blocks (or IPs).

These suppliers are spread all around the world and their design methodology or design culture may be very diversified. Despite normalization efforts, the way of describing IP blocks in terms of catalog data and delivery files is specific to each supplier. It may be cumbersome and not effective for a large company to make available to its designers information about reusable blocks in which they show interest in a heterogeneous fashion. Furthermore, the designers need to see immediately the relevant data and possibly be able to make fast comparison or an initial preselection. Therefore it is advisable that both external and internal IPs appear in the same corporate standardized manner.

Note also that while non-confidential marketing data are generally available on Internet, more accurate and more confidential data have to be supplied by external electronic virtual components suppliers to designers of large corporations.

An external server, constituting an import portal 3(fig.1), hosts buffer catalogs 4. For each target corporation (corporation A, corporation B, ...) a format, defining the fields of the catalog, through which an electronic virtual component IP has to be described is entered, by an import portal manager as a XML (Extended Mark up Language) Documentation Type Definition (DTD). This format is de facto an obligatory corporate format to be respected for being published in the intranet IP catalog. This process is repeated for any supported target corporation.

When a supplier 5 (supplier S1, supplier S2) wishes to supply information about an IP, he has to indicate for which target corporation he is willing to upload IP meta data in the import portal 3. This upload access is controlled by the access management system of the import portal working on password declaration. At that time the fields of the buffer catalog under the requested format are open for the supplier. The supplier uploads meta data, which can be text type, parametric, claims, attributes or URL links to data sheet, etc... These meta data are stored through XML files in a database of the buffer catalog within the import portal. A supplier has the possibility to modify his description until he is ready to freeze it or release it. He can also reenter later for declaring a new version of his IP. Only the supplier, or uploader, who is the owner of the catalog data he filled in can view these data in then import portal.

The IP XML meta data released in the buffer catalog for a specific target corporation is then automatically transferred to the target private intranet catalog data base and de facto made visible within the intranet catalog.

The buffer catalog and the intranet target catalog are so called compatible catalogs. For sake of simplicity, it can first be considered that they are based on strictly identical catalog infrastructure defined below.

The intranet catalog can be viewed as an image catalog of the buffer catalog as both the taxonomy and the format (XML document type definitions (DTD) ) of both catalogs are identical, the labeling and the structuring of the XML meta data being identical too. Thus the data are just added in the intranet IP database.

The external suppliers 5 (Figure1) thus do not access the intranet catalogs for uploading meta data and the corporate designers, within the firewall, are not accessing catalogs through Internet.

Each catalog is defined by its infrastructure, its contents, which are a set of IPs, and the functions that can be performed on the catalog items (life cycle modification, searching, support and information broadcasting around the catalog for instance).

The catalog infrastructure is defined by a pair (T,F) where :
- T is the catalog taxonomy or IP classification.
- F is a set of library formats, each format being defined by a XML document type definition (DTD). If F contains only one format the catalog is a so-called single format catalog.

In the following description, a well structured IP XML catalog is defined by a catalog infrastructure as defined above, a set of IPs and two applications F and MD associating respectively to each IPᵢ:
- A format element of F : F(IPᵢ).
- A set of XML meta data : MD(IPᵢ). By meta data it is meant descriptive catalog data and not actual design files.

The wording well structured is related to the use of XML tagging implying a good support of functions such as searching, life cycle catalog modification capabilities, format bridging, etc...

The catalog taxonomy T is defined by :
- A rooted tree or a directed acyclic graph (DAG).
- A mapping associating to each node of the tree or DAG a subset of IPs with the following rules:
   - at the top or root is associated the whole set of IPs;
   - the subset associated to a node is partitioned into disjoint subsets associated to its successor nodes.

Several types of classifications may be used. The most commonly used criteria are the application field and the function performed by the IP.

An IP format F(IPᵢ) is defined as a XML document type definition (XML DTD) defining and structuring the set of catalog meta data MD(IPᵢ) associated with an predetermined IP IPᵢ. The DTD defines de facto a hierarchy H among the various elements or fields in the catalog.

Practically these meta data correspond to information about IPs that should help a designer to understand the functions performed by an IP, its performances and quality, allowing for instance to sort a set of IPs to find our the relevant one.

A DTD is by definition a hierarchical declaration of XML elements. In the IP format description used here, the branch elements of the tree are preferably text type elements and are considered as different level of titles (titles, subtitles, etc...)

The meta data MD (IPᵢ) appearing at the leaves of the hierarchy describing the IP are commonly of the following types:
- Text types, which may correspond to single text fields or extensible text areas.
- Attributes.
- URL addresses.

Attributes may be:
- Multi valued attributes for which the set of values are predefined and enumerated during the declaration. A simple case is Boolean attributes taking 2 values. IP hardness for instance is an attribute that can take 3 values, namely " hard ", " soft " " firm".
- Multi valued attributes with a non numerable set of values. For instance, an attribute pointing to a target technology has, by definition, a non numerable set of values as new technologies may appear at any time. In such a case, character strings express the attribute values.
- Parametric value attributes. In this case, the values are any real number and are associated with a large variety of units, such as nanoseconds for timing, megabits per second for throughput, watts for power dissipation, etc... Comprehensive processing of these data types has to be available as these attributes are targeted during the search process and comparison and range containment checking has to be available.

URL addresses allow establishing a link to data pre-stored on the server hosting the catalog at a specific URL address. The data may commonly be data sheet, product sheet, and any kind of documentation as well as design files.

Catalog data, also called meta data as mentioned above, are any kind of descriptive data assisting in understanding the functions and characteristics of an IP. It should assist in selecting the IPs with respect to a need and to an application. Catalog data are assumed to be version independent.

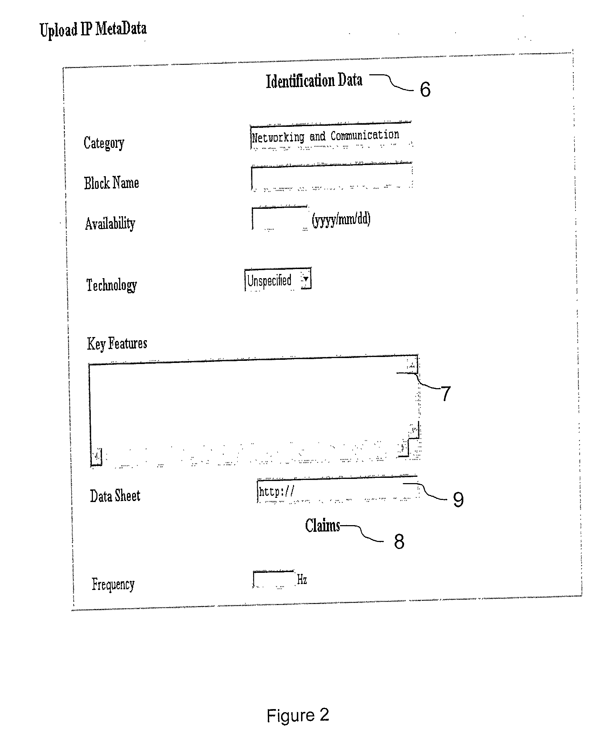

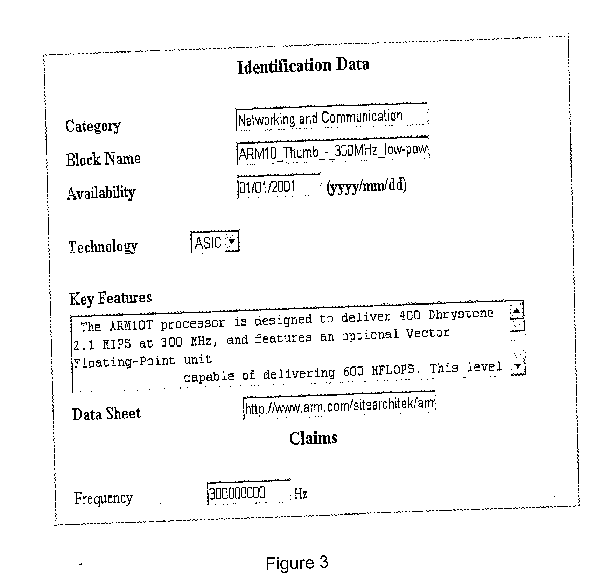

Figure 2 shows an IP format open for upload and figure 3 shows the corresponding View in the catalog

The catalog data are commonly:
- Identification data 6, supporting a first level of searching.
- Key features 7.
- Claims 8 which are targeted to demonstrate performances of the IP or its quality.
- Link to data sheet 9 and product sheet and all levels of documentation.
- Version history or summary.
- Delivery data description. etc...

The information describing the IP is translated as values included in the XML description file associated to that IP. Thus, to each IP is associated a XML file corresponding to the meta data MD (IPᵢ) of the IP. The whole catalog meta data is the union of the XML files of all the IPs.

A large variety of functions is supported in a well structured XML catalog, such as extended and flexible searching on XML attributes, on line data uploading, catalog viewing (Figure 3), file downloading and life cycle catalog modification.

Life cycle modification is an important feature. Once a catalog has been created and IPs descriptions have been entered, it is important to have the ability of modifying some catalog features without having the burden to reenter the data. By catalog modification is meant catalog structure modification, mainly format modification or taxonomy modification. When a format is modified, the new format replaces the previous one.

A catalog modification is a permissible modification if no XML meta data MD (IPᵢ) have been altered or destroyed for already stored IPs and no data type violation has appeared. A catalog modification is semi permissible if and only if a single identified XML element value has been altered. Permissible and semi permissible catalog modifications respect the hierarchy relation H of the DTD defining the format before modification and the data typing of the leaves for all IPs.

As an example, the following permissible catalog modifications can be implemented in the system described here:
- Flattening taxonomy levels.
- Flattening 2 levels of titles in a format.
- Changing a title or a subtitle.
- Adding a new XML sub-branch, constituting a child element, in the IP format DTD. The corresponding field is empty and open for data uploading for the already stored IPs.
- Permuting the ordering of 2 XML child elements of the same parent element, i.e. of two elements connected to a common node of the tree.

These preliminary definitions of well structured XML catalogs allow to give out the main fundamental definitions supporting the IP import portal namely " compatible catalogs ". For sake of simplicity it is assumed that each catalog mentioned here has a single format.

Two well structured single format XML catalogs are strictly compatible if their taxonomy as well as their formats, defined as XML document type definitions, are identical. Two well structured XML catalogs are weakly compatible if the format of one of the catalogs can be obtained by applying permissible and semi permissible modifications on the other one. The invention can be applied to all types of compatible catalogs, i.e. both to strictly compatible and to weakly compatible catalogs. If weak compatibility is supported, some fields may be empty in the target catalog after meta data transfer from the buffer catalog as not existing in the buffer catalog or, in the reverse direction, some data filled in the buffer catalog may be lost in the target catalog as non existing in the target catalog. The overall transfer will, however, be valid. Weak compatibility may bring in some flexibility in the buffer catalog, for instance for life cycle support.

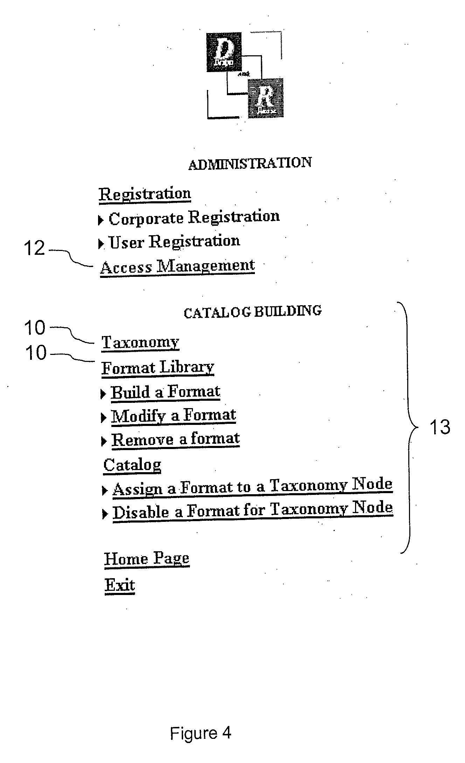

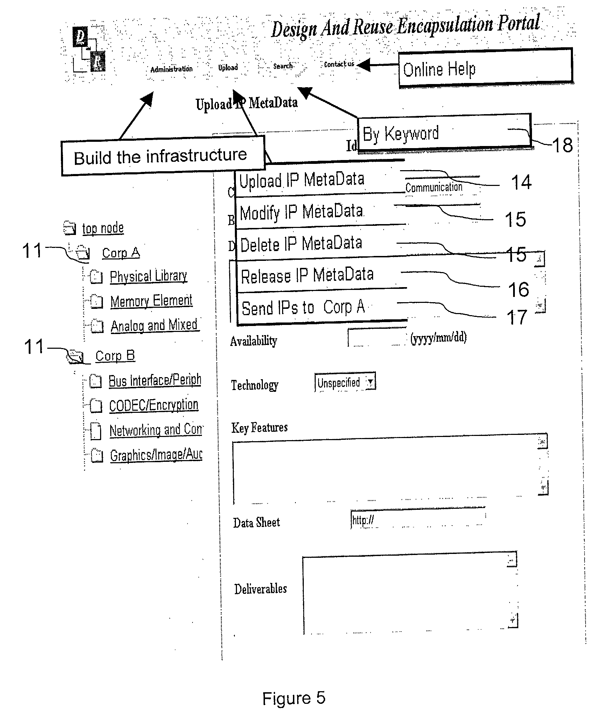

The overall functions supported within an import portal are illustrated in figures 4 and 5.

Administration functions (Figure 4):
- Creating multi corporation catalogs 10. It is shown in figure 5 that the first layer 11 of the IP classification corresponds to the set of supported target corporations. This set can be enlarged by adding new first level nodes.
- Performing Access management 12 by controlling the user access and verifying for instance that, for an IP, only the supplier of this IP can view, modify and update its description in the import portal.
- Life cycle flexibility through permissible or semi permissible modifications 13.

IP supplier functions (Figure 5):
- Uploading catalog metadata 14.The supplier first chooses the target corporation then the category in which his IP fits and then uploads the fields.
- Modifying /Deleting metadata 15.
- Releasing IP metadata 16.
- Send IP metadata to the target catalog 17.
- Viewing IPs with protected access. 18

The disclosed system thus allows both standardization of IP data provided to a given corporation by external suppliers and work in a protected intranet environment of the designers of the corporation. Any data or item stored in the buffer catalog is automatically tagged by a XML label and becomes an XML entity. The bridging techniques between the external buffer catalog and an image target catalog are based on the above-defined notion of XML compatible well structured catalogs. Meta data stored in the buffer catalog will be automatically transferred to the target catalog, stored in the target XML data base and become visible in the intranet catalog.

## Claims

1. A system **characterized in that in that** it comprises
at least one intranet target IP catalog (2) stored on an electronic virtual components information intranet IP management portal (1), having a predefined infrastructure and containing electronic virtual components descriptions through XML meta data,
an external import portal (3) hosting a buffer catalog (4) having an infrastructure compatible with the target intranet catalog infrastructure and containing electronic virtual components descriptions through by XML meta data that can be uploaded on line by electronic virtual components suppliers (5),
and means for transferring the electronic virtual components XML meta data from the buffer catalog (4) to the target catalog (2).

2. System according to claim 1, **characterized in that** a corporate standard format required by a target corporation to be published in the corresponding intranet target catalog (2) is defined as XML Documentation Type Definition.

3. System according to claim 2, **characterized in that** a buffer catalog (4) is created in the import portal (3) for each target corporation, each buffer catalog (4) being compatible with the corresponding intranet target catalog (2).

4. System according to any one of claims 1 to 3, **characterized in that** a catalog (2, 4) is defined by a catalog taxonomy, a set of library formats, each format being defined by a XML Documentation Type Definition, XML meta data associated with the electronic virtual components and that buffer and intranet target catalogs are compatible if their infrastructures are identical or can be derived one from the other by permissible modification.

5. System according one of claims 1 to 4, **characterized in that** the import portal hosts multi target buffer catalogs and triggers the transfer of XML meta data to the target catalog data base.
